(19) Europäisches Patentamt
European Patent Office
Office européen des brevets

(11) EP 3 384 261 B1

(12) **EUROPEAN PATENT SPECIFICATION**

(45) Date of publication and mention of the grant of the patent:
**25.11.2020 Bulletin 2020/48**

(21) Application number: **16871349.3**

(22) Date of filing: **29.11.2016**

(51) Int Cl.:
***G01L 1/04*** (2006.01) ***G01L 1/14*** (2006.01)
***G01L 1/22*** (2006.01) ***G01L 1/24*** (2006.01)
***G01L 1/26*** (2006.01) ***G01G 1/18*** (2006.01)
***G01G 3/08*** (2006.01)

(86) International application number:
**PCT/US2016/063951**

(87) International publication number:
**WO 2017/095792 (08.06.2017 Gazette 2017/23)**

(54) **INSTRUMENTED SPINDLE OR LOAD CELL FOR HIGH LOAD, HIGH RESOLUTION**

INSTRUMENTIERTE SPINDEL ODER WÄGEZELLE FÜR HOHE BELASTUNG, HOHE AUFLÖSUNG

TIGE INSTRUMENTÉE OU CELLULE DE CHARGE POUR CHARGE ÉLEVÉE, À HAUTE RÉSOLUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2015 US 201562260951 P**

(43) Date of publication of application:
**10.10.2018 Bulletin 2018/41**

(73) Proprietor: **Link Engineering Company**
**Plymouth, MI 48170 (US)**

(72) Inventor: **CUTTINO, James F.**
**Charlotte, NC 28262 (US)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**US-A- 3 484 732**
**US-A- 3 720 275**
**US-A- 4 037 675**
**US-A- 4 375 243**
**US-A- 4 690 230**
**US-A- 4 842 085**
**US-A1- 2005 132 816**
**US-A1- 2009 090 564**
**US-A1- 2009 090 565**
**US-B1- 6 422 096**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 384 261 B1

## Description

The present patent application/patent claims the benefit of priority of co-pending U.S. Provisional Patent Application No. 62/260,951, filed on November 30, 2015, and entitled "INSTRUMENTED SPINDLE OR LOAD CELL FOR HIGH LOAD, HIGH-RESOLUTION,".

The present invention relates generally to devices and assembles for measuring forces and moments. More specifically, the present invention relates generally to an instrumented spindle or load cell for high load, high-resolution.

Instrumented spindles and load cells are used to measure a number of things, including, for example, the forces and moments on a tire. In most cases, there is a tradeoff between high load and high-resolution. It is difficult to measure a high load with high-resolution.

US2009/0090565 A1 discloses a scale which can include a low capacity sensing mechanism operatively coupled to a load, wherein the low capacity sensing mechanism may detect movement of the load. A transfer mechanism can be operatively coupled to the low capacity sensing mechanism, wherein the low capacity sensing mechanism may enable the scale to weigh both relatively heavy loads and relatively light loads to a minor division resolution associated with the low capacity sensing mechanism.

US4037675A discloses a leaf spring weighing scale which uses load cells to measure the deflection of the load support. The load cells are arranged in tandem. One of the load cells is a low range deflection reading cell, and the other load cell is a high range measuring cell. Each of the load cells is bottomed before it reaches its deflection limit to prevent damage to the cell. A point contact connection between the load support and the load cells eliminates errors caused by lateral forces, and errors due to the non-linearities in the load support deflection. The leaf springs of the scale are constructed as thin strips to eliminate the effects of "oil canning", and to reduce structural and assembly inaccuracies.

US3720275A discloses a pendulum scale which has a scale beam carrying an optical microscale and a sample pan assembly including plural weight hangers. Weights are provided and are carried by either the weight hangers or weight retaining elements. A light source illuminates the optical microscale, and portions of the light are received by photocells, the signals from which are representative of the scale beam position; these signals are supplied to a decoder which controls which weights are carried by the weight hangers and which weights are carried by the retaining elements. Preferably, a first lesser sensitive scale beam and a second greater sensitive scale beam are cumulatively engaged with the sample pan assembly. A digital read-out device is connected with the decoder to provide a read-out of the weight of a sample placed in the sample pan of the sample pan assembly.

US6422096B1 discloses a load cell which comprises a member for receiving forces applied by the load, and a plurality of force sensing elements supported by the member and arranged with respect, to each other to independently sense differently directed components of the applied forces. The member is disposed, e.g., in a horizontal plane for receiving the load forces, and the force sensing elements are strain gages. One of the strain gages is arranged to sense a component of the forces applied in a vertical direction relative to the plane, and a second strain gage is arranged to sense a component of the forces applied in a horizontal direction relative to the plane. Among other advantages, the load cell is highly versatile can be used to measure loading forces applied in virtually any direction.

US4375243A discloses an electronic scale which is provided with two or more load cells in which the first load cell covers a low load range, and each successive cell covers a greater load range than the preceding cell. The cells are connected mechanically in tandem such that a load on the scales is applied to each cell simultaneously. Electrical signals from each load cell when performing a weighing operation are processed by a microcomputer to digitize the signals and to select the signal coming from the first load cell in the tandem connection which is not overloaded. The microprocessor scales the measurement signal and displays the weight on an alphanumeric readout. Memory circuits are included for storing tare weights and for storing unit weights during counting operations. When a number of units in a group is to be counted, the microprocessor divides a measured weight by the unit weight and outputs the count to the alphanumeric readout display. A low profile of the tandem load cell arrangement is obtained by the use of Z-brackets or L-brackets to provide the mechanical interconnections. All switching of ranges is done automatically by the microprocessor without attention of the user.

US2005132816A1 discloses a piezoelectric flexural sensing structure having increased sensitivity and decreased noise, without sacrifice of the sensor bandwidth. The structure is made up of a proof mass, a beam with a base and optionally having castellated bonding surfaces and two <011> poled bonding mode PMN-PT crystal plates mounted on the beam.

Load cells typically utilize an engineered compliance to operate. For example, a typical method is to build a device that is strong enough to hold a given load range, but has an engineered compliance range that can be measured, often in the form of a displacement or a strain given the load applied. This is how a fish scale works - there is a spring that provides a compliance (i.e. stretch) that is proportional to the load applied. The resulting displacement of the hook due to the stretch of the spring is measured by a dial or indicator. A calibration factor is applied to correlate the position of the dial or indicator to a particular load. Higher loads often require stiffer measuring instruments, but stiffer measuring instruments make it difficult to attain higher resolutions due to limitations in instrumentation. For example, to measure a whale, the fish scale would need to have an extremely stiff spring, otherwise it would fail under the load. If one tries to use the same fish scale to weigh a goldfish, the very stiff spring would not deform enough to be measured by the dial or indicator using the naked eye. Thus, the problem of high load versus high-resolution.

Thus, what is still needed in the art is an instrumented spindle or load cell that is capable of measuring a range of loads, including high loads, with high-resolution, while avoiding the need to utilize expensive instrumentation.

In various exemplary embodiments, the present invention provides a dual sensor approach for measuring a range of loads, including high loads, with high-resolution, while avoiding the need to utilize expensive instrumentation. In this dual sensor approach, a typical strain gage or other sensing device is used to measure heavy loads, but a second, much higher resolution, non-contacting (or other) metrology system is used in parallel to measure displacement of the strain gage (or other) load cell until the range of the non-contacting (or other) metrology system is exceeded, at which time the strain gage (or other) load cell takes over.

Using the fish scale analogy, this is equivalent to putting a high-resolution microscope on the dial and observing the smallest deflection of the dial. Even a spring strong enough to hold a whale deflects *some* amount under the weight of the goldfish. With the high-resolution microscope, one might see the hook move a few nm or so, and one can calibrate this value to give an accurate weight of the goldfish. The difficulty is that under higher loads, one may move outside the viewing area of the high-resolution microscope. However, since it is not contacting the fish scale dial, it will not be damaged, and one can simply begin to observe the dial with the naked eye once the loads are large enough to move the dial significantly. Either way, the structural stiffness of the scale is sufficient to hold the larger weight.

This technique is applied to build a spindle or load cell with sufficient stiffness to maintain large loads, while using a secondary (non-contact) metrology method to provide higher resolution for lower loads. One specific application is a measurement spindle that is designed to measure the forces and moments generated by a tire on a road surface (to analyze grip, traction, cornering, etc.). These forces can easily reach in the thousands of pounds for typical passenger cars. However, the rolling resistance of tires is also of great importance, as that affects the fuel economy of the vehicle. Rolling resistance will typically be much smaller, along the lines of 5-15 lbs. The present invention provides a means to measure both simultaneously.

In one exemplary embodiment, the present invention provides an assembly according to claim 1. The assembly further comprises a support structure coupled to one or more of the compliant flexure mechanism, the low-resolution load sensor, and the high-resolution load sensor. The low-resolution load sensor is a contact sensor in physical contact the compliant flexure mechanism. Optionally, the low-resolution load sensor is disposed adjacent to a narrowed neck portion of the compliant flexure mechanism. Optionally, the low-resolution load sensor comprises a strain gage. Optionally, the high-resolution load sensor comprises one of a capacitance gage, an eddy current probe, an optical sensor, and another type of high-resolution sensor.

In another exemplary embodiment, the present invention provides a method according to claim 6. The method further comprises providing a support structure coupled to one or more of the compliant flexure mechanism, the low-resolution load sensor, and the high-resolution load sensor. The low-resolution load sensor is a contact sensor in physical contact to the compliant flexure mechanism. Optionally, the low-resolution load sensor is disposed adjacent to a narrowed neck portion of the compliant flexure mechanism. Optionally, the low-resolution load sensor comprises a strain gage. Optionally, the high-resolution load sensor comprises one of a capacitance gage, an eddy current probe, an optical sensor, and another type of high-resolution sensor.

The present invention is illustrated and described herein with reference to the various figures, in which like reference number are used to denote like device or assembly components/method steps, as appropriate, and in which:

FIG. 1 is a schematic diagram conceptually illustrating the operation of one exemplary embodiment of the instrumented spindle or load cell of the present invention;

FIG. 2 is a schematic diagram conceptually illustrating the operation of another exemplary embodiment of the instrumented spindle or load cell of the present invention; and

FIG. 3 is a schematic diagram conceptually illustrating the operation of a further exemplary embodiment of the instrumented spindle or load cell of the present invention.

Again, in various exemplary embodiments, the present invention provides a dual sensor approach for measuring a range of loads, including high loads, with high-resolution, while avoiding the need to utilize expensive instrumentation. In this dual sensor approach, a typical strain gage or other sensing device is used to measure heavy loads, but a second, much higher resolution, non-contacting (or other) metrology system is used in parallel to measure displacement of the strain gage (or other) load cell until the range of the non-contacting (or other) metrology system is exceeded, at which time the strain gage (or other) load cell takes over.

Again, using the fish scale analogy, this is equivalent to putting a high-resolution microscope on the dial and observing the smallest deflection of the dial. Even a spring strong enough to hold a whale deflects *some* amount under the weight of the goldfish. With the high-resolution microscope, one might see the hook move a few nm or so, and one can calibrate this value to give an accurate weight of the goldfish. The difficulty is that under higher loads, one may move outside the viewing area of the high-resolution microscope. However, since it is not contacting the fish scale dial, it will not be damaged, and one can simply begin to observe the dial with the naked eye once the loads are large enough to move the dial significantly. Either way, the structural stiffness of the scale is sufficient to hold the larger weight.

Again, this technique is applied to build a spindle or load cell with sufficient stiffness to maintain large loads, while using a secondary (non-contact) metrology method to provide higher resolution for lower loads. One specific application is a measurement spindle that is designed to measure the forces and moments generated by a tire on a road surface (to analyze grip, traction, cornering, etc.). These forces can easily reach in the thousands of pounds for typical passenger cars. However, the rolling resistance of tires is also of great importance, as that affects the fuel economy of the vehicle. Rolling resistance will typically be much smaller, along the lines of 5-15 lbs. The present invention provides a means to measure both simultaneously.

Referring now to FIG. 1, in one exemplary embodiment, the instrumented spindle or load cell 10 of the present invention includes a compliant flexure mechanism 12 that is stretched, compressed, twisted, flexed, or otherwise deflected or deformed under a load, F. The compliant flexure mechanism 14 may be coupled to any suitable support structure(s) 16. A contact load sensor 18 is coupled to the compliant flexure mechanism 12 and configured to, directly or indirectly, measure gross deflection or deformation 19 under a relatively high load, F. A non-contact load sensor 20 is coupled to the compliant flexure mechanism 12 and configured to, directly or indirectly, measure fine deflection or deformation 21 under a relatively low load, F. Alternatively, the non-contact load sensor 20 can, directly or indirectly, measure deflection or deformation of the contact load sensor 18. Because the non-contact load sensor 20 is non-contact, it is not damaged by a relatively high load, F. In this respect, the non-contact load sensor 20 can also be used to fine tune the gross measurement of the contact load sensor 18.

A wheel spindle or the like may use this technique to measure tire forces and moments, while also having sufficient resolution to measure rolling resistance without changing sensors (typically, two separate measuring machines are required, one for the large load case with lower resolution, and a second with higher resolution but very restricted maximum loads). In this case, the compliant flexure mechanism 12 may be designed to deflect a sufficient amount to maximize output of the strain gage 18 under maximum load, say, for example, 2000 lbs. Simultaneously, a separate capacitance gage or similar non-contacting instrument 20 can be used to monitor the deflection of the spindle axle under load. The capacitance gages 20 can have resolutions as fine as 0.8 nm or better. So, under light loads (such as those indicative of rolling resistance), although the flexure system does not deflect enough to achieve a significant signal from the strain gage 18, the capacitance probe 20 can easily detect the movement, providing accurate load determination even at low loads. As the load increases, the range of the capacitance probe 20 is exceeded, and the strain gage 18 is used to measure from that point forward. The capacitance gage 20 is non-contacting, so no damage will occur to the metrology system.

Referring now to FIG. 2, in another exemplary embodiment, the resolution of the instrumented spindle or load cell 10 can further be enhanced by allowing even more compliance of one metrology system over the other. In this case, a given load F (the value one ultimately wishes to determine) results in a deflection in the low-resolution sensing region of $\delta l_s$ 23, but the same force results in a larger deflection, $\delta l_{hr}$ 25 in the full length of the beam 12. The smaller deflection $\delta l_s$ 23 protects the strain gage 18 from damage (strain gages are limited by approximately 1-2 millistrain, which determines the geometric design of the "neck" region 22 where it is attached). For clarity, strain is the change in sensed length, $\delta l_s$, divided by the sensed length, $l_s$.

$$\varepsilon = \delta l_s / l_s \qquad (1)$$

If a strain gage 18 had a length of 10 mm, 1 millistrain equates to a change in length of 0.01 mm. The cross section of the necked region 22 would therefore be designed to be thick enough to not exceed a deflection of 0.01-0.02 mm (for a max of 2 millistrain) while being thick enough to not fail under load, F.

The high-resolution sensor 20 capitalizes on the higher deflection $\delta l_{hr}$ 25, since it is non-contacting and cannot be damaged by excessive deflection. An example of such a sensor may be a capacitance gage, eddy current probe, or optical based sensor. As an example, assume that the high-resolution sensor 20 is a capacitance gage, with a resolution of 0.8 nm and an offset of 0.010". In that case, the bar may deflect a total distance of $\delta l_{hr}$ 25= 0.005" and still be in the range of the capacitance gage with its exceptional resolution. After $\delta l_{hr}$ 25 exceeds that 0.005", the capacitance probe simply reads a maximum or minimum voltage with no damage to the probe.

Referring now to FIG. 3, a flexure 12 may support the moving piece 24 against a stationary piece 26, providing a 0.006" lateral movement when 3000 lbs are applied in the lateral direction, for example. Both strain gages 18 and cap gages 20 are provided to ascertain the relative movement.

## Claims

1. An assembly operable for measuring one of a force and a moment, comprising:

   a compliant flexure mechanism (12) that is one of deflected and deformed under an applied load;
   a contact low-resolution load sensor (18) coupled to the compliant flexure mechanism (12) in physical contact and operable for measuring one of the deflection and the deformation of the compliant flexure mechanism (12) under a relatively higher load; and
   a high resolution load sensor (20) coupled to the compliant flexure mechanism (12) and operable for measuring one of the deflection and the deformation of the compliant flexure mechanism (12) under a relatively lower load;
   **characterized in that** the high-resolution load sensor (20) is a non-contact sensor that is disposed at a distance from the compliant flexure mechanism (12) such that the high- resolution load sensor (20) is not subject to damage by the relatively higher load.

2. The assembly of claim 1, further comprising a support structure (16) coupled to one or more of the compliant flexure mechanism (12), the low-resolution load sensor (18), and the high-resolution load sensor (20).

3. The assembly of claim 1, wherein the low-resolution load sensor (18) is disposed adjacent to a narrowed neck portion of the compliant flexure mechanism (12).

4. The assembly of claim 1, wherein the low-resolution load sensor (18) comprises a strain gage.

5. The assembly of claim 1, wherein the high-resolution load sensor (20) comprises one of a capacitance gage, an eddy current probe, and an optical sensor.

6. A method for providing an assembly operable for measuring one of a force and a moment, comprising:

   providing a compliant flexure mechanism (12) that is one of deflected and deformed under an applied load;
   providing a contact low-resolution load sensor (18) coupled to the compliant flexure mechanism (12) in physical contact and operable for measuring one of the deflection and the deformation of the compliant flexure mechanism (12) under a relatively higher load; and
   providing a high resolution load sensor (20) coupled to the compliant flexure mechanism (12) and operable for measuring one of the deflection and the deformation of the compliant flexure mechanism (12) under a relatively lower load without limiting deflection or deformation of the compliant flexure mechanism (12) under the relatively higher load;
   **characterized in that** the high-resolution load sensor (20) is a non-contact sensor that is disposed at a distance from the compliant flexure mechanism (12) such that the high-resolution load sensor (20) is not subject to damage by the relatively higher load.

7. The method of claim 6, further comprising providing a support structure (16) coupled to one or more of the compliant flexure mechanism (12), the low-resolution load sensor (18), and the high-resolution load sensor (20).

8. The method of claim 6, wherein the low-resolution load sensor (18) is disposed adjacent to a narrowed neck portion of the compliant flexure mechanism (12).

9. The method of claim 6, wherein the low-resolution load sensor (18) comprises a strain gage.

10. The method of claim 6, wherein the high-resolution load sensor (20) comprises one of a capacitance gage, an eddy current probe, and an optical sensor.

## Patentansprüche

1. Baugruppe, betreibbar zur Messung entweder einer Kraft oder eines Moments, umfassend:

einen nachgiebigen Biegemechanismus (12), der unter einer darauf wirkenden Last entweder gebogen oder verformt wird;
einen Kontaktlastsensor mit geringer Auflösung (18), der in physikalischem Kontakt an den nachgiebigen Biegemechanismus (12) gekoppelt ist und zur Messung entweder der Verbiegung oder der Verformung des nachgiebigen Biegemechanismus (12) unter einer höheren Last betreibbar ist; und
einen Lastsensor mit hoher Auflösung (20), der an den nachgiebigen Biegemechanismus (12) gekoppelt ist und zur Messung entweder der Verbiegung oder der Verformung des nachgiebigen Biegemechanismus (12) unter einer niedrigeren Last betreibbar ist;
**dadurch gekennzeichnet, dass** der Lastsensor mit hoher Auflösung (20) ein kontaktfreier Sensor ist, der sich in einem Abstand von dem nachgiebigen Biegemechanismus (12) befindet, so dass der Lastsensor mit hoher Auflösung (20) durch die höhere Last nicht beschädigt werden kann.

**2.** Baugruppe gemäß Anspruch 1, weiterhin umfassend eine Trägerstruktur (16), die an den nachgiebigen Biegemechanismus (12), den Lastsensor mit geringer Auflösung (18) und/oder den Lastsensor mit hoher Auflösung (20) gekoppelt ist.

**3.** Baugruppe gemäß Anspruch 1, wobei sich der Lastsensor mit geringer Auflösung (18) neben einem verengten Halsteil des nachgiebigen Biegemechanismus (12) befindet.

**4.** Baugruppe gemäß Anspruch 1, wobei der Lastsensor mit geringer Auflösung (18) einen Dehnungsmessstreifen umfasst.

**5.** Baugruppe gemäß Anspruch 1, wobei der Lastsensor mit hoher Auflösung (20) ein Kapazitätsmessgerät, eine Wirbelstromsonde und/oder einen optischen Sensor umfasst.

**6.** Verfahren zum Bereitstellen einer Baugruppe, die zur Messung entweder einer Kraft oder eines Moments betreibbar ist, umfassend:

Bereitstellen eines nachgiebigen Biegemechanismus (12), der unter einer darauf wirkenden Last entweder gebogen oder verformt wird;
Bereitstellen eines Kontaktlastsensors mit geringer Auflösung (18), der in physikalischem Kontakt an den nachgiebigen Biegemechanismus (12) gekoppelt ist und zur Messung entweder der Verbiegung oder der Verformung des nachgiebigen Biegemechanismus (12) unter einer höheren Last betreibbar ist; und
Bereitstellen eines Lastsensors mit hoher Auflösung (20), der an den nachgiebigen Biegemechanismus (12) gekoppelt ist und zur Messung entweder der Verbiegung oder der Verformung des nachgiebigen Biegemechanismus (12) unter einer niedrigeren Last betreibbar ist, ohne die Verbiegung oder Verformung des nachgiebigen Biegemechanismus (12) unter der höheren Last zu beschränken;
**dadurch gekennzeichnet, dass** der Lastsensor mit hoher Auflösung (20) ein kontaktfreier Sensor ist, der sich in einem Abstand von dem nachgiebigen Biegemechanismus (12) befindet, so dass der Lastsensor mit hoher Auflösung (20) durch die höhere Last nicht beschädigt werden kann.

**7.** Verfahren gemäß Anspruch 6, weiterhin umfassend das Bereitstellen einer Trägerstruktur (16), die an den nachgiebigen Biegemechanismus (12), den Lastsensor mit geringer Auflösung (18) und/oder den Lastsensor mit hoher Auflösung (20) gekoppelt ist.

**8.** Verfahren gemäß Anspruch 6, wobei sich der Lastsensor mit geringer Auflösung (18) neben einem verengten Halsteil des nachgiebigen Biegemechanismus (12) befindet.

**9.** Verfahren gemäß Anspruch 6, wobei der Lastsensor mit geringer Auflösung (18) einen Dehnungsmessstreifen umfasst.

**10.** Verfahren gemäß Anspruch 6, wobei der Lastsensor mit hoher Auflösung (20) ein Kapazitätsmessgerät, eine Wirbelstromsonde und/oder einen optischen Sensor umfasst.

## Revendications

**1.** Assemblage fonctionnant pour mesurer soit une force soit un moment, comprenant

un mécanisme de flexion accommodant (12) qui est soit courbé soit déformé sous une charge appliquée,
un capteur de charge à contact à résolution faible (18) couplé audit mécanisme de flexion accommodant (12) en contact physique et fonctionnant pour mesurer soit la force soit le moment dudit mécanisme de flexion accommodant (12) sous une charge supérieure, et
un capteur de charge à haute résolution (20) couplé audit mécanisme de flexion accommodant (12) et fonctionnant pour mesurer soit la force soit le moment dudit mécanisme de flexion accommodant (12) sous une charge inférieure,
**caractérisé en ce que** ledit capteur de charge à haute résolution (20) est un capteur sans contact qui est disposé à quelque distance dudit mécanisme de flexion accommodant (12) de manière que ledit capteur de charge à haute résolution (20) ne puisse pas être endommagé par ladite charge supérieure.

**2.** Assemblage selon la revendication 1, comprenant en outre une structure de support (16) couplée à l'un ou plusieurs parmi le mécanisme de flexion accommodant (12), le capteur de charge à résolution faible (18) et le capteur de charge à haute résolution (20).

**3.** Assemblage selon la revendication 1, dans lequel ledit capteur de charge à résolution faible (18) est disposé à côté d'un col rétréci dudit mécanisme de flexion accommodant (12).

**4.** Assemblage selon la revendication 1, dans lequel ledit capteur de charge à résolution faible (18) comprend une jauge de contrainte.

**5.** Assemblage selon la revendication 1, dans lequel ledit capteur de charge à haute résolution (20) comprend soit une jauge capacitive, soit une sonde à courants de Foucault, soit un capteur optique.

**6.** Procédé pour procurer un assemblage fonctionnant pour mesurer soit une force soit un moment, comprenant les étapes consistant à
procurer un mécanisme de flexion accommodant (12) qui est soit courbé soit déformé sous une charge appliquée,
procurer un capteur de charge à contact à résolution faible (18) couplé audit mécanisme de flexion accommodant (12) en contact physique et fonctionnant pour mesurer soit la force soit le moment dudit mécanisme de flexion accommodant (12) sous une charge supérieure, et
procurer un capteur de charge à haute résolution (20) couplé audit mécanisme de flexion accommodant (12) et fonctionnant pour mesurer soit la force soit le moment dudit mécanisme de flexion accommodant (12) sous une charge inférieure,
**caractérisé en ce que** ledit capteur de charge à haute résolution (20) est un capteur sans contact qui est disposé à quelque distance dudit mécanisme de flexion accommodant (12) de manière que ledit capteur de charge à haute résolution (20) ne puisse pas être endommagé par ladite charge supérieure.

**7.** Procédé selon la revendication 6, comprenant en outre l'étape consistant à procurer une structure de support (16) couplée à l'un ou plusieurs parmi le mécanisme de flexion accommodant (12), le capteur de charge à résolution faible (18) et le capteur de charge à haute résolution (20).

**8.** Procédé selon la revendication 6, dans lequel ledit capteur de charge à résolution faible (18) est disposé à côté d'un col rétréci dudit mécanisme de flexion accommodant (12).

**9.** Procédé selon la revendication 6, dans lequel ledit capteur de charge à résolution faible (18) comprend une jauge de contrainte.

**10.** Procédé selon la revendication 6, dans lequel ledit capteur de charge à haute résolution (20) comprend soit une jauge capacitive, soit une sonde à courants de Foucault, soit un capteur optique.

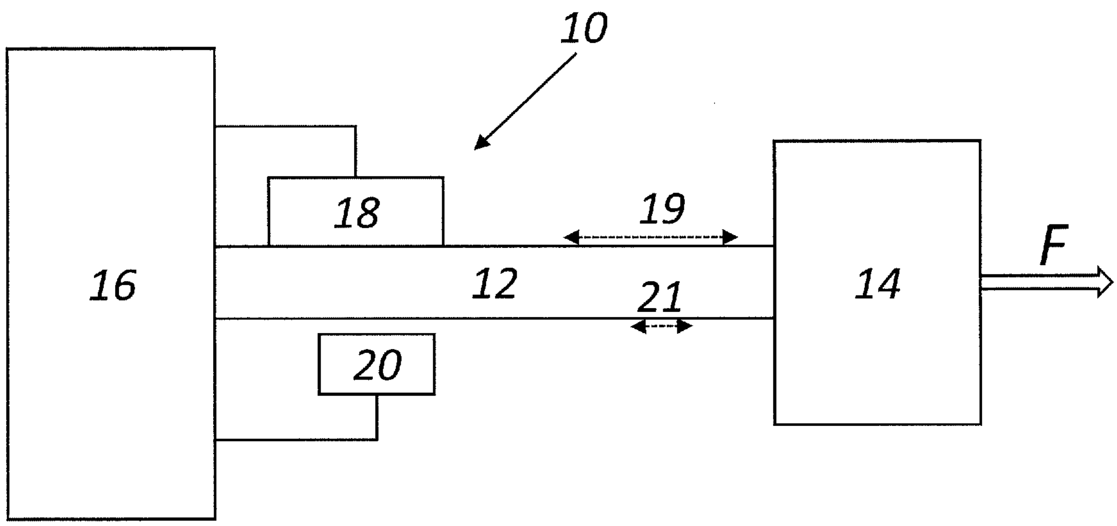


FIG. 1

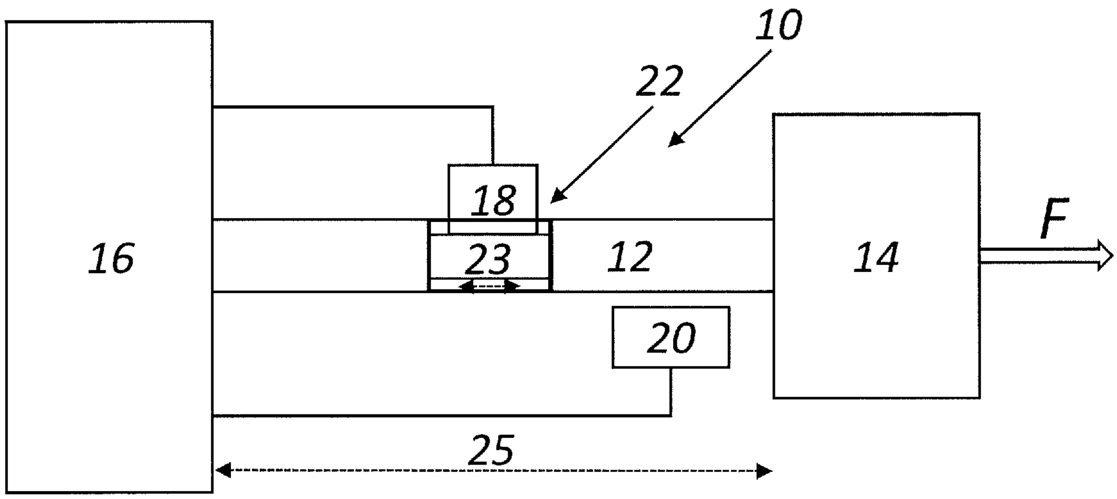


FIG. 2

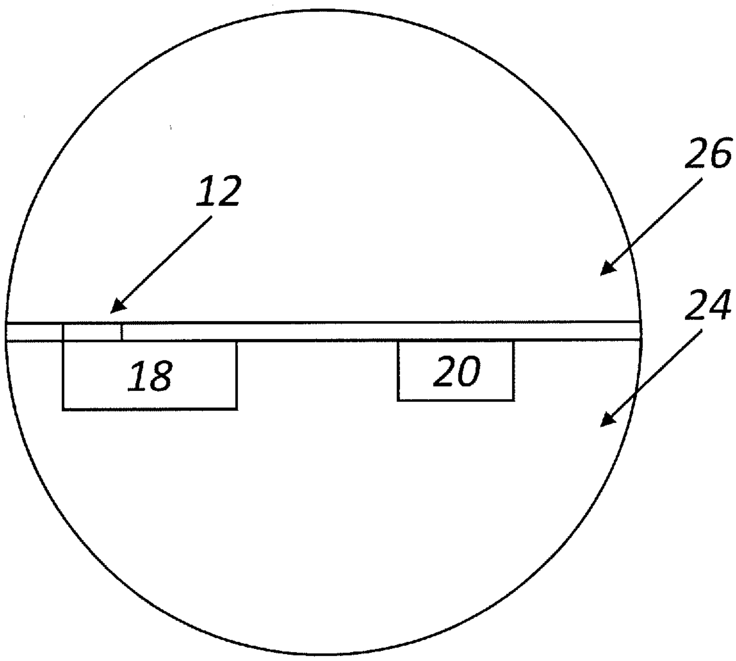


FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62260951
- US 20090090565 A1
- US 4037675 A
- US 3720275 A
- US 6422096 B1
- US 4375243 A
- US 2005132816 A1